# EUROPEAN PATENT APPLICATION

(11) **EP 1 477 919 A1**
(43) Date of publication of application: **17.11.2004**
(21) Application number: 04011289.8
(22) Date of filing: 12.05.2004
(51) Int. Cl.: G06F 17/60

(54) **System and method for information exchange, mobile terminal and computer program for use therein**

(30) Priority: 14.05.2003 JP 2003135226
(71) Applicant: NEC CORPORATION, Tokyo (JP)
(72) Inventor: Himeno, Yasuhiro, Tokyo (JP)
(74) Representative: Glawe. Delfs. Moll

(57) **Abstract**

In an information exchange system for exchanging information between a mobile terminal (1) and a shop server (2) through short-distance radio communication, the mobile terminal (1) collects "a demander side condition" exhibiting a condition or situation about products or services which a demander (user) desires, and "a supplier side condition" exhibiting a condition or situation about products or services which a supplier (shop) can supply. When the demander side condition and the supplier side condition coincide with each other, the mobile terminal (1) informs the user of information about the supplier.

## Description

### BACKGROUND OF THE INVENTION

### Field of the Invention

The present invention relates in general to an information exchange system and a mobile terminal using short-distance radio communication, and an information exchange method for use in the information exchange system and the mobile terminal. In particular, the invention relates to a technical field for exchanging information related to articles or the like between apparatuses through the short-distance radio communication.

### Description of the Related Art

In recent years, a method of buying and selling of a product (article) by mail order such as a virtual shop or an auction on the Internet has come into wide use along with the popularization of the Internet. In addition, mail-order business such as television shopping (teleshopping) is also actively carried out. However, even in a case where a product is purchased by utilizing such a buying and selling method, among products, a consumer (customer) hopes to actually take a product in his/her hand in many cases for the purpose of purchasing this product. Thus, in such cases, a consumer heeds to walk about the whole town to search for a shop dealing in the substantial product concerned.

In addition, even if a customer happens to find a suitable shop to purchase the desired product while walking around in town for the search, the desired product may not actually be found in the shop in many cases. Then, in such cases, after a customer inquires of a clerk about the product concerned in a shop that he/she called in, finally he/she is urged to buy an unrelated product by the clerk in some cases.

As described above, there is encountered a problem that even when a product is purchased by utilizing mail order which has been popularized recently, a customer must spare needless time until he/she actually purchases a desired product.

As for a method of solving this problem, there is a method including using a short-distance radio communication function such as BLUE TOOTH (registered trademark) installed in a mobile terminal or an IC ( Integrated Circuit) card (refer to JP 09-269982 A, JP 2002-109618 A, and JP 2002-165009 A, for example).

In other words, by utilizing a mobile terminal or an IC card including such a function, a user as a consumer can obtain information of products that are dealt in a shop.

A wireless card system constituted by an interrogator for carrying out non-contact communication, andawirelesscardwhich an individual carries to use is proposed in JP 09-269982 A (Japanese Patent Laid-Open No.09-269982).

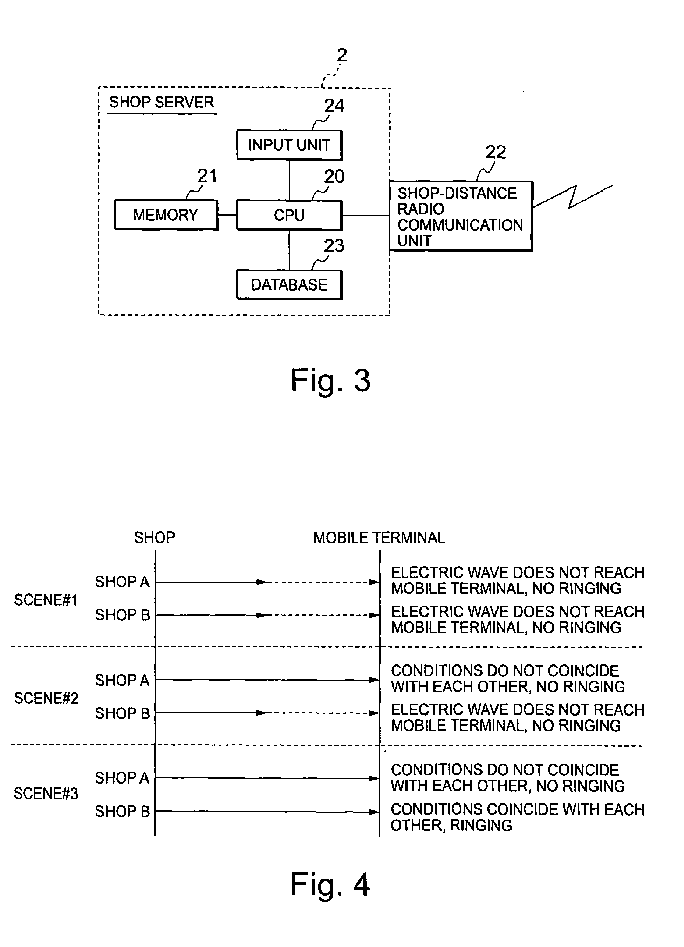

That is, in this system, identification IDs used to specify a plurality of information sections are set in advance. The interrogator transmits the identification ID corresponding to a section of the information to be transmitted, in the form in which the identification ID is contained in that information. Inresponsetotheinformationtransmittedfromtheinterrogator, the wireless card judges whether or not the identification ID contained in the received information agrees with the specified identification ID set in advance. Moreover, the wireless card, only when an identification ID contained in certain information out of the received information agrees with the specified identification code, accepts the information concerned as the information to be received (see pages 4 and 5, and Fig. 3).

A system for carrying out short-distance radio communication between a vending machine and a mobile terminal is proposed in JP 2002-109618 A (Japanese Patent Laid-Open No.2002-109618).

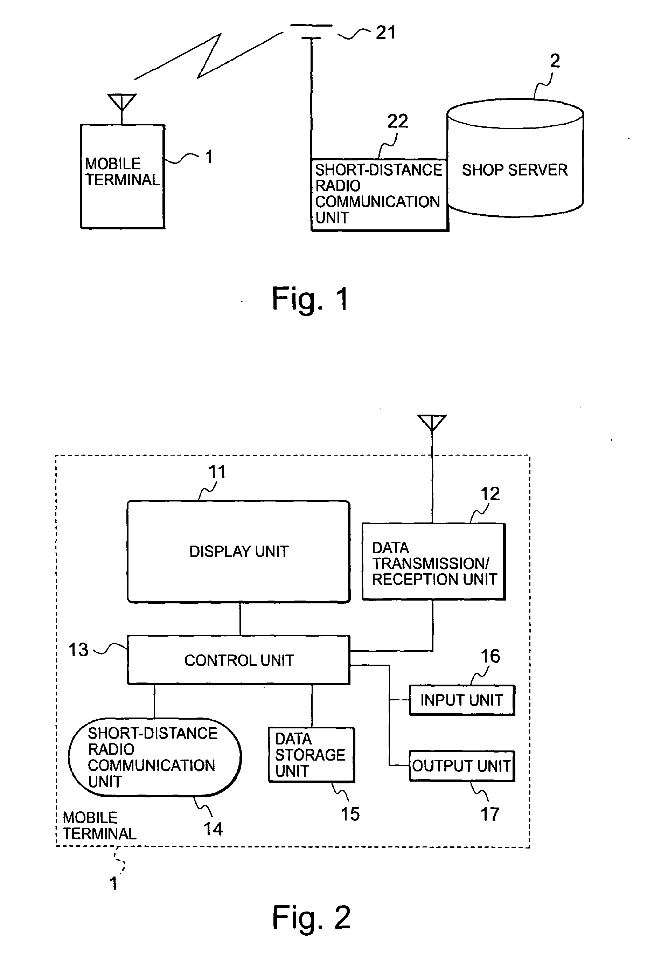

That is to say, if a user comes near a vending machine 1, then a mobile phone 3 which the user carries receives information related to products from the vending machine 1. At this time, the mobile phone 3 displays the information related to products on its display unit. Thereafter, information for requesting to sell a desired product is transmitted from the mobile phone 3 to the vending machine 1 in accordance with manipulation made by the user (see pages 8 and 9, and Fig. 1).

In JP 2002-165009 A (Japanese Patent Laid-Open No.2002-165009), there is proposed an information exchange intermediary system in which when users who carry their mobile terminals mutually enter a communication zone of short-distance radio communication, the users can be informed that the opposite parties each having a desired profile exist in the vicinity.

That is, in this system, a registered member 1 inputs desired profile information of desired other person to a mobile phone 40A. On the other hand, a registered member 2 inputs his/her own profile information to a mobile phone 40B. When the mobile phone 40A carried by the registered member 1 and the mobile phone 40B carried by the registered member 2 mutually enter the communication zone of short-distance radio communication, these mobile phones automatically start communication. When the mobile phone 40A and the mobile phone 40B exchange and collate their profile information or their authentication codes with each other and the results of the exchange and collation made through the communication indicate that both of the profile information or of the authentication codes are similar to each other or coincident with each other, the mobile phones 40A and 40B inform the registered members 1 and 2 that the desired opposite parties exist in the vicinity (see page 12, and Fig. 1).

In the conventional information exchange methods, as described in the above-mentioned patent documents, when information exchange or settlement of accounts for a product or the like is carried out using the short-distance radio communication, it is possible to obtain the information of products put on show within a shop.

In this case as well, however, to confirm that, a shop may actually have a stock of the product concerned at present, a customer (user) needs to verify, at every shop, that the shop concerned has a stock of the product concerned. That is to say, even in a case where the conventional information exchange method using the short-distance radio communication is utilized, there is encountered a problem that a customer needs to spare needless time for individual verification of stock status of products concerned in each shop, and so forth until finally he/she purchases a desired product.

### SUMMARY OF THE INVENTION

The present invention has been made in the light of the above-mentioned problems. It is, therefore, an object of the present invention to provide a system and a method for information exchange, a mobile terminal and a computer program for use therein with which a demander (user) can efficiently get information related to a desired object without going out for a shop dealing in the object concerned.

In order to attain the above-mentioned object, an information exchange system according to the present invention is characterized by having the following structure.

That is, there is provided an information exchange system for exchanging information between a mobile terminal (1) and an apparatus (2) of other party through short-distance radio communication, characterized by comprising:
information collection means for, in order to collect demander side information exhibiting a condition or a situation related to an object which a demander desires, and supplier side information exhibiting a condition or a situation related to an object which a supplier can supply in at least one of the mobile terminal and the apparatus of the other party, collecting at least one of the demander side information and the supplier side information on the basis of information exchange through the short-distance radio communication;
judgment means for judging whether or not the demander side information and the supplier side information coincide with each other; and
notifying means for, when the demander side information and the supplier side information coincide with each other, notifying a user of the mobile terminal of information related to the supplier.

For example, the object refers to at least one of a product and a service.

In a preferable embodiment of the present invention, the mobile terminal includes manipulation means with which a user can input the demander side information.

Further, for example, desired priority about the condition or situation related to the object desired by the demander which is contained in the demander side information can be set through the manipulation means, and the judgment means preferably judges in accordance with the priority set through the manipulation means whether or not the demander side information and the supplier side information coincide with each other.

Further, when said notifying means notifies, in accordance with the judgment results made by the judgment means, the user of the mobile terminal of the information related to the object having a higher priority, a notification mode is made different from that when the notifying means notifies the user of the mobile terminal of the information related to the object having a lower priority.

Note that the above-mentioned object can also be attained even by a method corresponding to the information exchange system having the above-mentioned configuration.

In addition, the above-mentioned object can also be attained even by a program code adapted to realize an operation of the mobile terminal equipment constituting the information exchange system having the above-mentioned configuration using a computer, and a computer readable storage medium having the program code stored therein.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The above and other objects, features and advantages of the present invention will become more apparent from the' following detailed description when taken in conjunction with the accompanying drawings wherein:
Fig. 1 is a block diagram showing a configuration of an information exchange system using short-distance radio communication according to an embodiment of the present invention;
Fig. 2 is a block diagram showing a configuration of a mobile terminal shown in Fig. 1;
Fig. 3 is a block diagram showing a system configuration of a shop side (a shop server 2) shown in Fig. 1;
Fig. 4 is a diagramuseful in explaining a ringing condition of a mobile terminal 1 shown in Fig. 1;
Fig. 5 is a flow chart showing a part of a control processing executed by an mobile terminal 1 and the shop server 2 according to the embodiment of the present invention (in a case where the transmitted/received information has basic information contents);
Fig. 6 is a diagram conceptually showing presence and absence of ringing in a case where information is exchanged between the mobile terminal 1 and the shop server 2 through short-distance radio communication according to the embodiment of the present invention (in a case where the transmitted/received information' has basic information contents);
Fig. 7 is a flow chart showing a part of a control processing executed by the mobile terminal 1 and the shop server 2 according to the embodiment of the present invention (in a case where there are many items of contents in the transmitted/received information);
Fig. 8 is a diagram conceptually showing presence and absence of ringing in a case where information is exchanged between the mobile terminal 1 and the shop server 2 through the short-distance radio communication according to the embodiment of the present invention (in a case where there are many items of contents in the transmitted/received information);
Fig. 9 is a block diagram useful in explaining an exchange of information between mobile terminals according to another embodiment of the present invention; and
Fig. 10 is a schematic view useful in explaining an application example of information exchange between a business enterprise and a salesman according to still another embodiment of the present invention.

### DETAILED DESCRIPTION OF THE PREFERRED EMBODIMENT

A preferred embodiment of the present invention will now be described in detail in accordance with the accompanying drawings.

Now, a preferred embodiment of an information exchange system according to the present invention will hereinafter be described in detail with reference to the accompanying drawings.

In an embodiment which will now be described, a description will be given below with respect to a specific case, as an example, where information related to a product, a service and the like which a user desires is exchanged between a mobile terminal possessed by the user (customer) and a shop side.

Fig. 1 is a block diagram showing a configuration of an information exchange system using short-distance radio communication according to an embodiment of the present invention.

The information exchange system shown in Fig. 1 is, classifying roughly, constituted by a mobile terminal 1 and a shop server 2. In this embodiment, information can be exchanged between the mobile terminal 1 and the shop server 2 through short-distance radio communication.

The shop server 2 includes an antenna 21 and a short-distance radio communication unit 22 for information exchange between the mobile terminal 1 and the shop server 2 through the short-distance radio communication. The shop server 2 is an information processor for generally controlling an operation of this information exchange system, and is installed in each shop.

The mobile terminal 1 is mobile terminal equipment typified by a PDA (Personal Digital Assistants), a mobile phone, or the like. The mobile terminal 1 gets information related to products and services which a shop deals in from the shop server 2 through the short-distance radio communication (its details will be described later).

It is noted that the shop (the shop server 2) is a supplier for supplying products and services. A user possessing the .mobile terminal 1 is a demander.

Fig. 2 is a block diagram showing a configuration of the mobile terminal 1 shown in Fig. 1. In Fig. 2, the mobile terminal 1 includes a display unit 11, a data transmission/reception unit 12, a control unit 13, a short-distance radio communication unit 14, a data storage unit 15, an input unit 16, and an output unit 17.

That is, the display unit 11 displays thereon information such as characters or an image so as for the information to be identifiable by a user in accordance with an instruction issued from the control unit 13.

The data transmission/reception unit 12 carries out transmission/reception of information based on short-distance radio communication procedures to/from at least the shop server 2 in accordance with instructions issued from the control unit 13 and the short-distance radio communication unit 14.

The data storage unit 15 stores various kinds of information in a readable style in accordance with an instruction issued from the control unit 13.

The input unit 16 is a device, such as a keyboard, for inputting information such as characters in correspondence to a manipulation made by a user.

The output unit 17 is a device for carrying out a notification for a user by using a voice, vibrations or the like in accordance with an instruction issued from the control unit 13.

Then, the control unit 13 executes a software program stored in the storage unit 15 for example in advance in a CPU (not shown) to thereby carry out an operation control of the mobile terminal 1.

On the other hand, Fig. 3 is a block diagram showing a system configuration of the shop side (the shop server 2) shown in Fig. 1. In Fig. 3, the shop server 2 includes hardware having a CPU 20 for executing a software program, a memory 21, a short-distance radio communication unit 22, a database 23, and an input unit 24. In addition, the input unit 24 is a general input device which a user (a clerk or the like of a shop) utilizes to input information in order to register information related to a corresponding shop (corresponding to "shop information" as will be described later) in the database 23. Then, the short-distance radio communication unit 22 carries out the bidirectional communication with the mobile terminal 1 in accordance with operation control made by the CPU 20.

As hardware of such a shop server 2, an information processor such as a general server computer can be adopted.

In this embodiment, a common short-distance radio system is adopted as a radio system for the short-distance radio communication unit 14 of the mobile terminal 1, and the short-distance radio communication unit 22 of the shop server 2. As for the short-distance radio system, there, for example, are given BLUE TOOTH (registered trademark), and ones described in IEEE (Institute of Electrical and Electronic Engineers) 802. 11a, IEEE802. 11b, IEEE802. 11e, IEEE802. 11g, and the like.

Information of a shop corresponding to the shop server 2 is inputted to the data storage unit 15 of the mobile terminal 1 in advance. As for the inputted information, there, for example, are kinds of objects for dealings with a customer, such as articles, services and the like which a shop deals in, stock of these objects (the number of objects in stock), a location of a shop, contact information, and the like.

In this embodiment, a general procedure can be adopted for a function itself for communication between the mobile terminal 1 and the shop server 2 based on the above-mentioned short-distance radio system. For this reason, its detailed description in this embodiment is omitted here for the sake of simplicity.

In this embodiment, a user possessing the mobile terminal 1 (hereinafter referred to as "a user a" for short when applicable) inputs information related to articles or services which he/she wants to get to the mobile terminal 1 in advance. The inputted information (hereinafter referred to as "a demander side condition" in some cases) is stored in the data storage unit 15 of the mobile terminal 1.

In addition, information (shop information) about articles and services which are dealt in within a shop having the shop server 2 installed therein, stock of these articles, and the like is inputted to the shop server 2 by utilizing the input unit 24. Then, the inputted information concerned (hereinafter referred to as "a supplier side condition" in some cases) is stored in the database 23 included in the shop server 2 in accordance with the control made by the CPU 20. It should be noted that this information is desirably reflected in real time in conjunction with accounts (cash register) of the shop concerned on the shop server 2.

Here, a ringing condition of the mobile terminal 1 will hereinafter be described with reference to Fig. 4. Fig. 4 is a diagram useful in explaining a ringing condition of the mobile terminal 1 shown in Fig. 1.

In the ringing condition of the mobile terminal 1 shown in Fig. 4, three scenes (scenes #1 to #3) are supposed. In this embodiment, when "the supplier side condition" and "the demander side condition" agree with each other, i.e., supply and demand conditions coincide with each other, the mobile terminal 1 rings through the output unit 17.

The scene #1 exhibits a case where shops A and B, and the user a are located apart from each other. In this case, the mobile terminal 1 possessed by the user a does not ring since the transmission/reception through the short-distance radio communication is impossible.

The scene #2 exhibits a case where the communication between the shop B and the user a is impossible, and though the communication between the shop A and the user a is possible, the supply and demand conditions do not agree with each other. In this case, the terminal 1 does not ring since the supply and demand conditions do not agree with each other.

Also, the scene #3 exhibits a state in which both the communication between the shop A and the user a and the communication between the shop B and the user a are possible. In this state, when the supply and demand conditions between the shop A and the user a do not agree with each other, the mobile terminal does not ring. On the other hand, when the supply and demand conditions between the shop B and the user a agree with each other, the mobile terminal rings. As a result, the user a can recognize that "the supplier side condition" in the shop B agrees with "the demander side condition" in the user a.

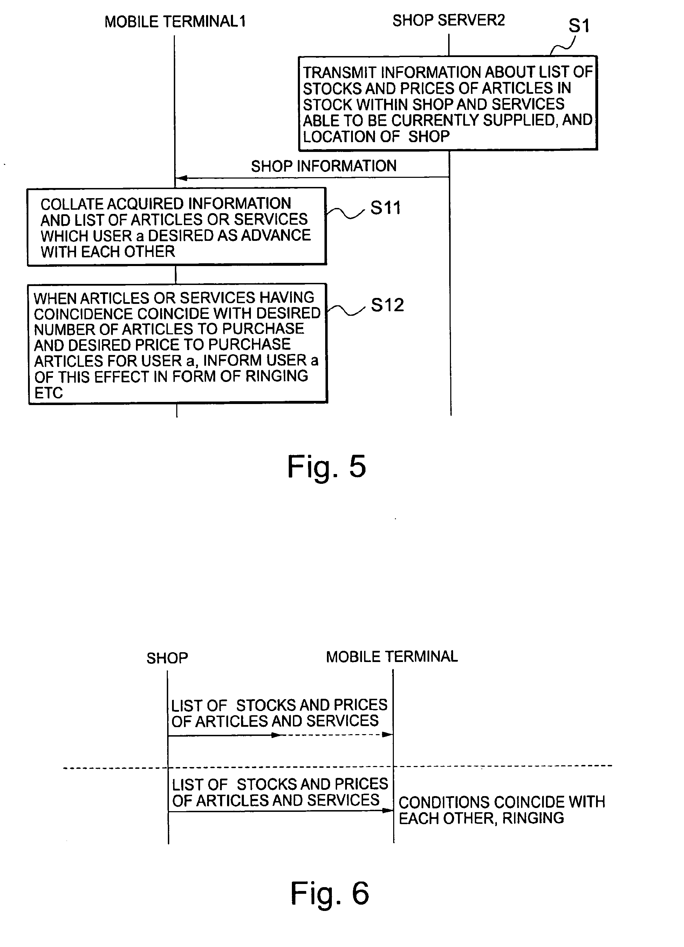

A concrete operation of the information exchange system in this embodiment having a ringing operation (see Fig. 4) described above as a basis will hereinafter be described with reference to Figs. 5 to 8.

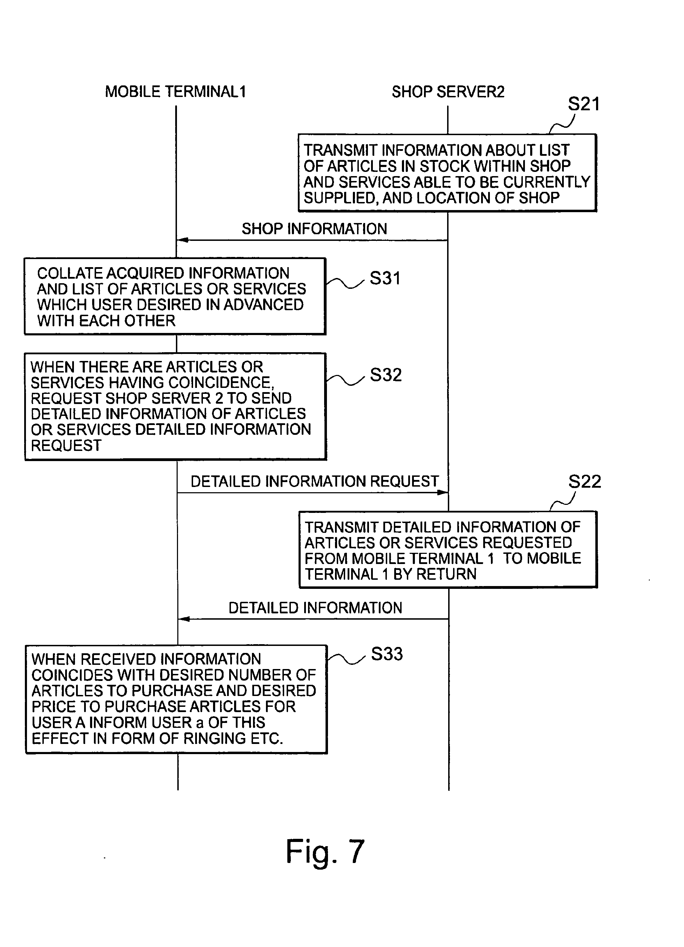

Figs. 5 and 7 are flow charts each showing a part of a control processing executed by the mobile terminal 1 and the shop server 2. A series of operations shown in these flow charts exhibit processing procedures of a software program executed by a CPU (not shown) included in the control unit 13 within the mobile terminal 1, and the CPU 20 of the shop server 2.

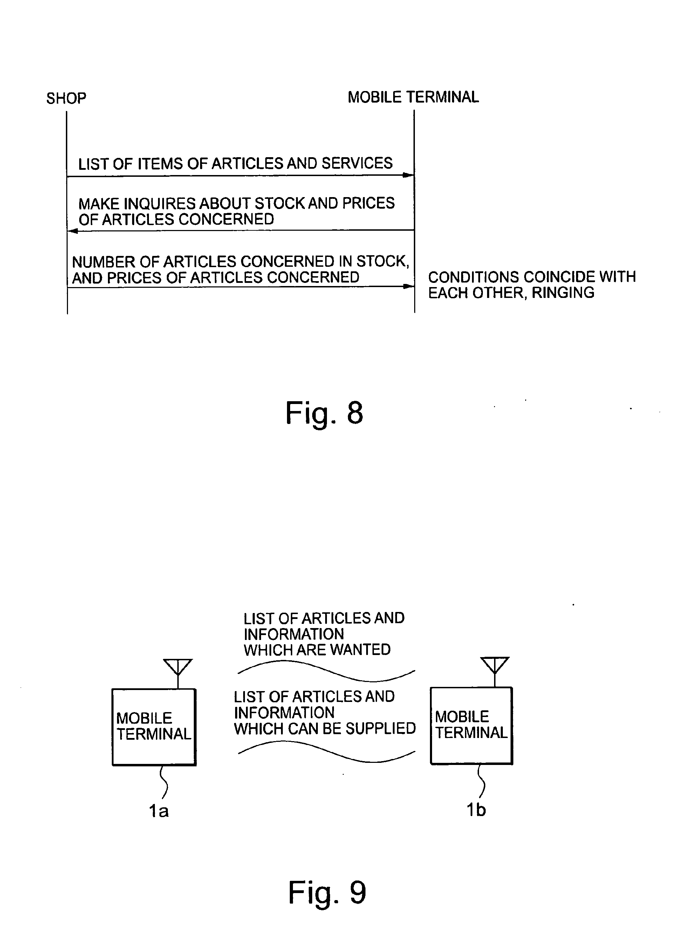

Also, Figs. 6 and 8 are diagrams each conceptually showing presence and absence of ringing in a case where information is exchanged between the mobile terminal 1 and the shop server 2 through the short-distance radio communication.

More specifically, Figs. 5 and 6 show procedures in a case where basic information is supplied from the shop server 2 to the mobile terminal 1 in an embodiment of the present invention.

Also, Figs. 7 and 8 show procedures in a case where there are a large number of items of information supplied from the shop server 2 to the mobile terminal 1 in the embodiment of the present invention.

### <Case where transmitted/received information has basic information contents>

First of all, a case where the information exchanged between the shop server 2 and the mobile terminal 1 has basic information contents will now be described with reference to Figs. 5 and 6.

When the user a has come to the vicinity of the shop, the short-distance radio communication unit 13 of the mobile terminal 1 communicates with the short-distance radio communication unit 22 of the shop server 2. The basic communication procedures in this case are as follows.

Firstly, the CPU 20 of the shop server 2 refers to the database 23 in which "the supplier side condition" is stored as described above. Then, the CPU 20 of the shop server 2 transmits, as "the supplier side condition", information (shop information) such as a list of stocks and prices of articles in stock within the shop and services able to be currently supplied, a location of the shop, and the like to the mobile terminal 1 through the short-distance radio communication unit 22 (refer to a procedure S1 in Fig. 5).

The control unit 13 of the mobile terminal 1 receives the shop information which has been transmitted from the shop server 2 in correspondence to the procedure S1 through the short-distance radio communication unit 14. Next, the control unit 13 collates the received shop information with the list of the information inputted as the information related to desired articles or services stored in the data storage unit 15 (i.e., the information which the user a inputted as "the demander side condition" in advance)(refer to a procedure S11 in Fig. 5).

That is to say, in the procedure S11, the control unit 13 of the mobile terminal 1 collates the shop information with the information related to desired articles or services to thereby extract articles or services agreeing with both the information. Next, the control unit 13 judges with the extracted articles or services whether or not a stock status or sales price of the objects concerned coincides with the desired number of articles for the user a to purchase and a desired price for the user a to purchase the desired articles.

It is noted that the desired number of articles to be purchased and a desired price of the articles to be purchased are information stored in the data storage unit 15. This information is inputted by the user a in advance through the input unit 16.

Then, when the results of the collation in the procedure S11 indicates that there are the articles or services for which the shop information coincides with the information related to the desired articles or services, the control unit 13 informs the user a that the shop concerned can supply the articles or services meeting "the demander side condition" which was formerly inputted (refer to a procedure S12 in Fig. 5). The information in the procedure S12 is carried out in the form of ringing made through the output unit 17, display of guidance with the display unit 11, or the like.

As a result, the user a can visit the shop with the help of the location information of the shop contained in the shop information acquired in the procedure S1, and also can get the desired articles or services.

### <Case where transmitted/received information has large number of items of contents>

Next, a description will now be given with respect to a case where the results of reference to Figs. 5 and 6 indicates that the number of items of the contents of the information exchanged between the shop server 2 and the mobile terminal 1 is larger than that in the above-mentioned case with reference to Figs. 7 and 8.

In a case where there are a large number of article lists as in a supermarket, if stock information or price information are also added, then a quantity of communication between the shop server 2 and the mobile terminal 1 becomes too large. Thus, in such a case, the following procedures are adopted.

The shop server 2 transmits a list of articles in stock in a shop or services able to be currently supplied, and information of a location of the shop in the form of shop information to the mobile terminal 1 through the short-distance radio communication unit 22 (refer to a procedure S21 in Fig. 7).

In the mobile terminal 1, the control unit 13 collates the shop information acquired through the procedure S21 by the short-distance radio communication unit 14 with a list of articles or services which the user a desired in advance (refer to a procedure S31 in Fig. 7). That is, the control unit 13 judges whether or not a part of "the supplier side condition" coincides with a part of "the demander side condition".

The control unit 13, when there are articles or services having the coincidence in the procedure S31, controls the short-distance radio communication unit 14 of the mobile terminal 1 to thereby send a request for detailed information of the articles or services concerned to the shop server 2 (refer to a procedure S32 in Fig. 7).

The CPU 20 of the shop server 2 retrieves the detailed information of the articles or services requested from the mobile terminal 1 within the database 23 in correspondence to the 'processing in the procedure S32 in the mobile terminal 1. Then, the CPU 20 of the shop server 2 transmits the retrieval results to the mobile terminal 1 by return through the short-distance radio communication unit 22 (refer to a procedure S22 in Fig. 7).

In the mobile terminal 1, the control unit 13 judges whether or not the detailed information received through the short-distance radio communication unit 14 coincides with the desired number of articles for the user a to purchase, and a desired price for the user a to purchase the articles. That is to say, the control unit 13 judges whether or not a remaining part of "the supplier side condition" and a remaining part of "the demander side condition" which are out of an.object in the collation made through the procedure S31 coincide with each other. Then, the mobile terminal 1, when detecting the coincidence part in this judgment, informs the user a of the shop concerned can supply articles or services coinciding with "the demander side condition" formerly inputted (refer to a procedure S33 in Fig. 7). The information in the procedure S33 is carried out in the form of ringing made through the output unit 17, display of guidance with the display unit 11, or the like.

As a result, the user a can visit the shop with the help of the location information of the shop contained in the shop information acquired through the procedure S21, and also can get desired articles or services.

As described above, in accordance with this embodiment, the user possessing the mobile terminal 1 makes inquires about stock through the short-distance radio communication, whereby he/she can verify stock of desired articles or the like without entering the shop concerned.

In addition, in accordance with this embodiment, if the user a has only to input data (i.e., "the demander side condition") to the mobile terminal 1 in advance, then he/she is informed whether or not there is a product or service meeting the condition concerned from the mobile terminal 1. As a result, the user (customer) possessing the mobile terminal 1, if the product is a product which he/she has a will to purchase, can get the product or service concerned without actively searching for the products or services concerned.

### <Modifications of the embodiment>

In a suitable modification, the priority based on which the mobile terminal 1 informs a user of objects such as articles or services which the user wants to get can be set in the form of addition to the above-mentioned embodiment.

For example, in the modification, there is adopted a configuration in which information such as presence and absence of desired objects, quantities of desired objects and prices of desired objects can be set as an index of the priority in the mobile terminal 1. Then, in the mobile terminal 1, a mode of informing the user of the information is changed in correspondence to a degree of coincidence with the set condition (i.e., "the demander side condition"). As a more concrete example, in informing the user of the predetermined information in the modification, when articles or services are merely present, the user is informed of this effect in the form of only vibrations, and when quantities and prices are met, the user is informed of this effect in the form of vibrations and a sound.

In addition, in another modification, the shop server 2 shown in Fig. 2 is connected to the Internet (not shown) to thereby realize retrieval of a shop even from a location out of a zone of the above-mentioned radio communication. If such a system configuration is adopted, then after the user has roughly specified a location of an objective shop, he/she possessing the mobile terminal 1 moves to the neighborhood of this shop to enter a zone of communication with the shop concerned. Then, the mobile terminal 1 possessed by the user gets information of the newest situation of articles or services which the user wants to take in his/her hand for verification from the shop server 2 within the zone of the communication.

Fig. 9 is a block diagram useful in explaining exchange of information between mobile terminals according to another embodiment of the present invention. In an example shown in Fig. 9, there is adopted a configuration in which a method including utilization of the information exchange between mobile terminals 1a and 1b is realized in addition to a case of the information exchange between an individual and a shop. In other words, in such an example of the configuration, the information exchange system according to the present invention is utilized between one individual and another individual. As a result, it is possible to realize a utilization method including exchanging data related to a supply and demand situation or negotiating between persons passing along a street.

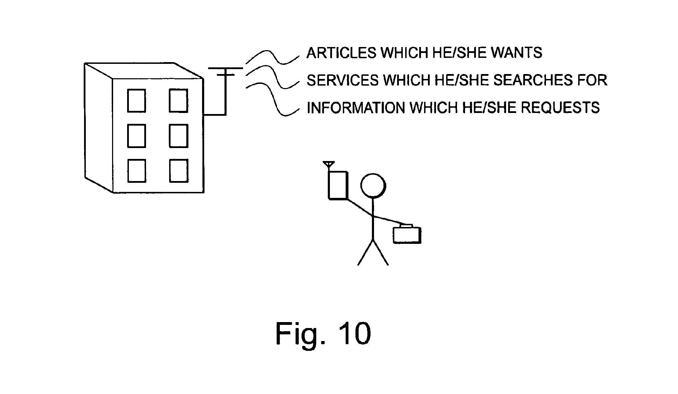

Moreover, Fig. 10 is a view useful in explaining an application example of information exchange between a business enterprise and a salesman according to still another embodiment of the present invention. In the example in Fig. 10, there is shown an application example in which the relationship between an individual and a shop is reversed to apply the present invention to the information exchange between a business enterprise and a salesman.

In this example, a business enterprise side previously inputs information of necessary materials and services in the form of "the demander side condition" to an information processor (server). On the other hand, "the supplier side condition" is set in a mobile terminal possessed by the salesman in advance. Then, when the salesman comes along the vicinity of the business enterprise, the mobile terminal receives "the demander side condition" from the business enterprise through the short-distance radio communication. At this time, if the demander side condition is a condition which the salesman concerned deals with, then the mobile terminal rings. As a result, the salesman concerned can obtain this information as a foothold for a business talk. This configuration, for example, may be utilized in a situation in which while a business enterprise inconvenienced about a low operation speed of a printer wants to exchange this printer for a new one but has no budget spared for a research for comparison about various kinds of printers at all.

As another example, there is supposed a configuration in which an information processor of a business enterprise informs a user of information which has a specific frequency or which is obtained through encryption via the short-distance radio communication. In this configuration, there is conceived a use method in which when a salesman in his destination for a contract comes along the vicinity of the business enterprise concerned, if it becomes clear that the number of articles in stock has been reduced, and he has stock in hand, then he drops in the business enterprise concerned.

In addition, the present invention can also be realized in the form of a system in which information is exchanged between machines (e.g., between servers or between information terminals) and not through a human being. For example, there is supposed a case where a mobile terminal is installed in a vehicle. In this case, a use method is also possible in which when the vehicle concerned goes out of a parking area of a motorway and it becomes clear that gasoline is insufficient, then an alarm alerts the mobile terminal installed in the vehicle concerned to this effect, and so forth. In this case, information related to a remaining traveling distance is transmitted from the vehicle to a gas station. On the other hand, information related to a distance up to a gas station located at the shortest distance from a current position is transmitted from the gas station to the vehicle. As a result, it is possible to exactly warn a driver of the vehicle concerned (i.e., a user of the mobile terminal) of the necessity to supply the vehicle with fuel.

As described above, in accordance with the above-mentioned embodiment, the configuration and the operation as stated above are adopted, whereby the user possessing the mobile terminal 1 can verify stock without entering the shop. Consequently, there is obtained an effect that the user can save time when searching for articles or services which he/she wants.

That is, in the information exchange system using the short-distance radio communication of the above-mentioned embodiment, for example, in buying and selling between an individual and a shop, the information which is registered in advance using the mobile terminal possessed by the individual (user) is exchanged between the mobile terminal concerned and the shop. Then, when the supply and demand condition is met in correspondence to the mutual supply and demand situations, this system informs the user possessing the mobile terminal of this effect. As a result, the individual concerned can save time when searching for articles or services which he/she wants.

In other words, in accordance with the above-mentioned embodiment, in buying and selling between the individual and the shop, the mobile terminal communicates with the shop server installed in the shop to make inquires about whether or not desired products are in stock. Consequently, the individual concerned can verify whether or not the desired products are in stockwithout entering the shop.

In addition, in the above-mentioned embodiment, the mobile terminal informs the user of information related to the desired products if a user (customer) possessing the mobile terminal only inputs data about desired products in advance. Consequently, the user, if the products are products which the user has a will to purchase, can readily get the products concerned without actively searching for these products.

Here, in the above-mentioned embodiment, the specific case of the system configuration in which the shop server 2 is installed in each shop has been described as an example. However, it should be noted that the present invention is not intended to be limited to such a system configuration. For example, in a commercial institution such as a shopping street or a shopping mall in which a plurality of shops exist in a relatively small scale area, on behalf of a part of or all of a plurality of shops, one set of the antenna 21 and the short-distance radio communication unit 22 may be installed.

Note that the present invention described by giving the above-mentioned embodiment as examples is attained by supplying the mobile terminal 1 and the shop server 2 with a computer program capable of realizing a function of the flow charts referred in the description of the embodiments to write the computer program to a CPU of an apparatus to execute the computer program. In addition, the computer program supplied to the apparatus concerned may be stored in a storage device such as a readable and writable memory or a hard disc device.

In addition, in the above-mentioned case, for a method including supplying each apparatus with a computer program, at the present time, general procedures can be adopted as typified by a method including installing the computer program in the apparatus concerned through various kinds of recording media such as a floppy (registered trademark) disc, a method including downloading the computer program from the outside through a communication line such as the Internet, or the like. In such a case, the present invention is constituted by codes of such a computer program or a storage medium.

While this invention has been described in connection with a certain preferred embodiment, it is to be understood that the subject matter encompassed by way of this invention is not to be limited to the specific embodiment. On the contrary, it is intended for the subject matter of the invention to include all alternative, modification and equivalents as can be included within the spirit and scope of the following claims.

## Claims

1. An information exchange system for exchanging information between a mobile terminal (1) and an apparatus (2) of other party through short-distance radio communication,
**characterized by** comprising:
information collection means for, in order to collect demander side information exhibiting a condition or a situation related to an object which a demander desires, and supplier side information exhibiting a condition or a situation related to an object which a supplier can supply in at least one of the mobile terminal and the apparatus of the other party, collecting at least one of the demander side information and the supplier side information on the basis of information exchange through the short-distance radio communication;
judgment means for judging whether or not the demander side information and the supplier side information coincide with each other; and
notifying means for, when the demander side information and the supplier side information coincide with each other, notifying a user of the mobile terminal of information related to the supplier.

2. The information exchange system according to claim 1, **characterized in that** the mobile terminal includes manipulation means with which a user can input the demander side information.

3. The information exchange system according to claim 2, **characterized in that**
desired priority about the condition or situation related to the object desired by the demander which is contained in the demander side information can be set through said manipulation means, and
said judgment means judges, in accordance with the priority set through saidmanipulation means, whether or not the demander side information and the supplier side information coincide with each other.

4. The information exchange system according to claim 3, **characterized in that**
when said notifying means notifies, in accordance with the judgment results made by said judgment means, the user of the mobile terminal of the information related to the object having a higher priority, a notification mode is made different from that when said notifying means notifies the user of the mobile terminal of the information related to the object having a lower priority.

5. The information exchange system according to any one of claims 1 to 4, **characterized in that** the mobile terminal includes at least said notifying means.

6. The information exchange system according to any one of claims 1 to 5, **characterized in that** the apparatus of the other party includes input means with which a user can input the supplier side information.

7. The information exchange system according to claim 1, **characterized in that** the object is at least one of a product and a service.

8. The information exchange system according to claim 7, **characterized in that** the condition or situation related to the object exhibits a price and a quantity about at least one of the product and the service.

9. The information exchange system according to claim 1, **characterized in that** the apparatus of the other party is a mobile terminal.

10. The information exchange system according to'claim 1, **characterized by** further comprising communication means for, when the mobile terminal and the apparatus of the other party are located beyond a range in which communication is possible through the short-distance radio communication, supplying the mobile terminal with information with which a relative positional relationship between the mobile terminal and the apparatus of the other party is made fall within the range in which the communication is possible through the Internet communication.

11. The information exchange system according to claim 10, **characterized in that** the information with which the relative positional relationship between the mobile terminal and the apparatus of the other party is made fall within the range in which the communication is possible through the short-distance radio communication is map information indicating the site of the apparatus of the other party.

12. An information exchange method of exchanging information between a mobile terminal (1) and an apparatus (2) of the other party through short-distance radio communication, **characterized by** comprising:
in order to collect demander side information exhibiting a condition or a situation related to an object which a demander desires, and supplier side information exhibiting a condition or a situation related to an object which a supplier can supply in at least one of the mobile terminal and the apparatus of the other party, collecting at least one of the demander side information and the supplier side information on the basis of information exchange through the short-distance radio communication;
judging whether or not the demander side information and the supplier side information coincide with each other; and
when the demander side information and the supplier side information coincide with each other, notifying a user of the mobile terminal of information related to the supplier.

13. The information exchange method according to claim 12, **characterized in that**, in said judging, whether or not the demander side information and the supplier side information coincide with each other is judged in accordance with desired priority which is set by the user with respect to the condition or situation related to the desired object and contained in the demander side information.

14. The information exchange method according to claim 13, **characterized in that** when the information related to the object is notified the user of the mobile terminal in accordance with the judgment results of said judging, a notification mode of the information related to the object having the higher priority is made different from a notification mode of the information related to the object having the lower priority.

15. The information exchange method according to claim 12, **characterized in that** the object is at least one of a product and a service.

16. The information exchange method according to claim 15, **characterized in that** the condition or situation related to the object exhibits a price and a quantity about at least one of the product and the service.

17. The information exchange method according to claim 12, **characterized by** further comprising, when themobile terminal and the apparatus of the other party are located beyond a range in which communication is possible through the short-distance radio communication, supplying the mobile terminal with information with which a relative positional relationship between the mobile terminal and the apparatus of the other party is made fall within the range in which the communication is possible through the Internet communication.

18. The information exchange method according to claim 17, **characterized in that** the information with which the relative positional relationship between the mobile terminal and the apparatus of the other party is made fall within the range in which the communication is possible through the short-distance radio communication is map information indicating the site of the apparatus of the other party.

19. A mobile terminal (1) for exchanging information with an apparatus (2) of other party through short-distance radio communication, **characterized in that** the mobile terminal is adapted to notifying a user of the mobile terminal of information related to a supplier, when demander side information exhibiting a condition or situation related to an object which a demander desires and supplier side information exhibiting a condition or situation about an object which the supplier can supply coincide with each other.

20. The mobile terminal according to claim 19, **characterized by** further comprising judgment means for judging whether or not the demander side information and the supplier side information coincide with each other.

21. The mobile terminal according to claim 20, **characterized by** further comprising information collection means for collecting at least one of the demander side information and the supplier side information through information exchange using the short-distance radio communication in order to collect the demander side information and the supplier side information in the mobile terminal.

22. The mobile terminal according to claim 19, **characterized by** further comprising manipulation means with which a user can input the demander side information.

23. The mobile terminal according to claim 20, **characterized by** further comprising manipulation means with which the user can input the condition or situation related to the desired object and its desired priority as the demander side information,
**characterized in that** the judgment means judges in accordance with the priority set with the manipulation means whether or not the demander side information and the supplier side information coincide with each other.

24. The mobile terminal according to claim 23, **characterized in that**, when the user is notified of the information related to the object having a higher priority, a notification mode is made different from that when the user is notified of the information related to the object having a lower priority.

25. The mobile terminal according to any one of claims 19 to 24, **characterized in that** the object is at least one of a product and a service.

26. The mobile terminal according to claim 25, **characterized in that** the condition or situation related to the object exhibits a price and a quantity about at least one of the product and the service.

27. A computer program for controlling an operation of a mobile terminal (1) for exchanging information with an apparatus (2) of the other party through short-distance radio communication, **characterized in that** the computer program causing the mobile terminal to implement a function of:
notifying a user of the mobile terminal of information related to a supplier, when demander side information exhibiting a condition or situation related to an object which a demander desires and supplier side information exhibiting a condition or situation about an object which the supplier can supply coincide with each other.

28. The computer program according to claim 27, **characterized in that** the computer program further comprising a function of judging whether or not the demander side information and the supplier side information coincide with each other.

29. The computer program according to claim 28, **characterized in that** the computer program further comprising a function of collecting at least one of the demander side information and the supplier side information through information exchange using the short-distance radio communication in order to collect the demander side information and the supplier side information in the mobile terminal.
